# EUROPÄISCHE PATENTSCHRIFT

(11) **EP 2 508 816 B1**
(45) Veröffentlichungstag und Bekanntmachung des Hinweises auf die Patenterteilung: **12.06.2013**
(21) Anmeldenummer: 12154965.3
(22) Anmeldetag: 10.02.2012
(51) Int. Cl.: F24J 2/52, H01L 31/048

(54) **Dachhaken**
Ceiling hook
Crochet de toit

(30) Priorität: 05.04.2011 DE 202011004843 U
(43) Veröffentlichungstag der Anmeldung: 10.10.2012
(73) Patentinhaber: Köngener Asset Management UG (haftungsbeschränkt), 73257 Köngen (DE)
(72) Erfinder: Hoch, Norbert, 86916 Kaufering (DE)
(74) Vertreter: Reitstötter - Kinzebach

(56) Entgegenhaltungen:
- EP-A2- 1 764 454
- DE-A1- 4 228 464
- DE-U1-202006 009 907
- DE-U1-202007 011 725
- DE-U1-202010 007 681
- US-A- 6 070 368

## Beschreibung

Die vorliegende Erfindung betrifft einen Dachhaken zur Montage eines Solarmoduls auf einem Dach, wobei der Dachhaken ein Befestigungsmittel zur Befestigung des Dachhakens an dem Tragwerk des Daches, beispielsweise an einem Dachsparren, und ein Haltemittel, das mit dem zu montierenden Solarmodul verbindbar ist, aufweist.

Solarmodule, unter denen in der vorliegenden Anmeldung sowohl solarthermische Module als auch Photovoltaikmodule verstanden werden, werden üblicherweise auf geneigten Dächern in einer Aufdachkonstruktion montiert. Daher ist es erforderlich, das Solarmodul mit dem Tragwerk des Daches zu verbinden. Zu diesem Zweck werden üblicherweise Dachhaken eingesetzt, die einerseits die Befestigungsmittel zur Befestigung des Dachhakens an dem Tragwerk des Daches und andererseits ein Haltemittel, das mit dem zu montierenden Solarmodul verbindbar ist, aufweisen. Das Haltemittel wird durch die Dachauflage auf die Dachoberseite geführt. Bei einem Ziegeldach kann das Haltemittel beispielsweise als U-förmiger Haken ausgebildet sein, welcher einen Dachziegel umgreift.

Derartige Dachhaken können einstückig ausgebildet sein. Eine höhere Flexibilität bei der Fertigung derartiger Dachhaken wird jedoch erreicht, wenn die Dachhaken mehrteilig ausgebildet sind, da beispielsweise durch Kombination separater Befestigungsmittel und Haltemittel eine leichtere Anpassung an unterschiedliche Tragwerkkonstruktionen und Solarmodule möglich ist. Ein derartiger mehrteiliger Dachhaken ist beispielsweise aus dem deutschen Gebrauchsmuster DE 20 2007 011 725 U1 bekannt. Der dort beschriebene Dachhaken besteht aus einem Befestigungsmittel und einem Haltemittel, die als separate Bauteile ausgebildet und durch Verschweißen zusammengefügt sind. Ein derartiger Dachhaken ist aber in der Herstellung aufwendig und teuer und kann nur aus Materialien hergestellt werden, die gut miteinander verschweißbar sind.

Aus dem deutschen Gebrauchsmuster DE 202010007681 ist ferner ein Dachhaken zur Montage eines Solarmoduls auf einem Dach bekannt, der ein Befestigungsmittel zur Befestigung des Dachhakens an dem Tragwerk des Daches und ein Haltemittel, das mit dem zu montierenden Solarmodul verbindbar ist, umfasst, wobei das Befestigungsmittel und das Haltemittel durch Materialumformung miteinander verbindbar sind. Dieser Dachhaken ist besonders einfach und kostengünstig herstellbar und es kann jedes Material verwendet werden, das eine Materialumformung, insbesondere zur Herstellung einer formschlüssigen Verbindung zwischen den beiden Bauteilen, erlaubt.

Damit die bekannten Dachhaken eine vorgegebene Traglast erreichen, muss die Dimensionierung des Dachhakens, insbesondere hinsichtlich der Dicke des Materials, gewisse Mindestmaße erreichen. Diese Materialdicke hat einen maßgeblichen Einfluss auf die Herstellungskosten der Dachhaken.

Der vorliegenden Erfindung liegt daher das technische Problem zugrunde, einen Dachhaken bereitzustellen, welcher, verglichen mit den bekannten Dachhaken, kostengünstiger in der Herstellung ist und die Flexibilität bei der Herstellung unterschiedlichster Dachhakenvarianten beibehält.

Gelöst wird dieses Problem durch den Dachhaken mit den Merkmalen des vorliegenden Anspruchs 1. Vorteilhafte Weiterbildungen des erfindungsgemäßen Dachhakens sind Gegenstände der abhängigen Ansprüche.

Demnach betrifft die Erfindung einen Dachhaken zur Montage eines Solarmoduls auf einem Dach mit einem als Platte ausgebildeten Befestigungsmittel zur Befestigung des Dachhakens an dem Tragwerk des Daches und einem Haltemittel, das mit dem zu montierenden Solarmodul verbindbar ist, wobei der erfindungsgemäße Dachhaken dadurch gekennzeichnet ist, dass das Befestigungsmittel und das Haltemittel durch Biegen, Verpressen und Clinchen miteinander verbunden sind. Der erfindungsgemäße Dachhaken ist daher besonders einfach und kostengünstig herstellbar und es kann grundsätzlich jedes Material verwendet werden, das eine Materialumformung, insbesondere zur Herstellung einer formschlüssigen Verbindung zwischen den beiden Bauteilen, erlaubt.

Eine besonders stabile Verbindung zwischen Befestigungsmittel und Haltemittel wird erreicht, weil das Haltemittel außerdem eine Lasche aufweist, welche durch Clinchen und/oder Verpressen, vorzugsweise durch Clinchen und Verpressen, mit der Oberseite der Platte verbunden ist.

Gemäß einer bevorzugten Ausführungsform weist die Platte wenigstens eine Öffnung auf, in welche wenigstens eine Nase des Haltemittels eingreift. Die Länge der Nase ist dabei größer als die Dicke der Platte, so dass die Nase auf der Unterseite der Platte herausragt. Das aus der Platte herausragende freie Ende der Nase wird dann umgebogen und mit der Unterseite der Platte verpresst.

Besonders bevorzugt ist die Nase des Haltemittels derart verjüngt, dass das Haltemittel wenigstens eine Schulter aufweist, die gegen die Oberseite der Platte in Anschlag kommt.

Die erfindungsgemäß vorgeschlagene Verbindung zwischen Befestigungsmittel und Haltemittel eignet sich insbesondere für Dachhaken, die aus dünnen, versteiften Blechen gefertigt sind.

Demnach betrifft eine bevorzugte Ausführungsform der die Erfindung einen Dachhaken der dadurch gekennzeichnet ist, das Befestigungsmittel und/oder das Haltemittel aus einem Flachmaterial bestehen, das zur Versteifung zumindest teilweise umgeformt ist.

Durch die zumindest teilweise Umformung des Flachmaterials, beispielsweise eines Metallbleches, kann die Blechdicke reduziert werden, ohne dass die Stabilität, insbesondere die Steifigkeit, des Dachhakens verringert wird.

Vorzugsweise ist die Umformung des Flachmaterials an den Seitenrändern des Befestigungsmittels und/oder des Haltemittels vorgesehen. Das Flachmaterial weist dann weiterhin einen weitgehend ebenen zentralen Bereich auf, so dass eine einfache Befestigung an den Dachbalken einerseits und an den Solarpaneelen andererseits gewährleistet ist.

Dabei sind vorzugweise die Seitenränder des Befestigungsmittels und/oder des Haltemittels mit aufgekanteten Schenkeln versehen, so dass sich im Querschnitt ein im Wesentlichen L- oder U-förmiges Profil ergibt.

Das Befestigungsmittel kann beispielsweise als Platte ausgebildet sein. In diesem Fall sind die aufgekanteten Schenkel der Platte vorzugsweise umlaufend ausgebildet, so dass die Stabilität der Platte maximiert wird.

Die Platte kann beispielsweise trapezförmig ausgebildet sein. Eine derartige Platte sorgt einerseits für einen sicheren Halt des Befestigungsmittels auf dem Tragwerk des Daches, benötigt aber, beispielsweise verglichen mit einer rechteckigen oder quadratischen Platte, weniger Material.

Die Platte weist vorzugsweise ein oder mehrere Löcher, beispielsweise Rundlöcher, auf, durch die die Platte mit dem Tragwerk des Daches verschraubt oder vernietet werden kann.

Das Haltemittel kann beispielsweise als Haken ausgebildet sein. In diesem Fall sind die die Stabilität erhöhenden Schenkel an den Längsseiten des Hakens vorgesehen. Vorzugsweise befinden sich die Schenkel dann an beiden Längsseiten des Hakens, so dass der Haken im Querschnitt ein im Wesentlichen U-förmiges Profil aufweist.

An einem freien Ende des Hakens kann bei einer vorteilhaften Ausführungsform des erfindungsgemäßen Dachhakens ein Langloch zum Verbinden des Hakens mit dem zu montierenden Solarmodul vorgesehen sein. An dem, dem Langloch gegenüberliegenden freien Ende des Hakens ist dieser mit dem Befestigungsmittel, beispielsweise der trapezförmigen Platte, verbunden.

Das freie Ende des Hakens kann zur Herstellung einer Rastverbindung profiliert sein.

Gemäß einer bevorzugten Ausführungsform des erfindungsgemäßen Dachhakens weist das Haltemittel wenigstens eine Verstärkungssicke aufweist. Die Verstärkungssicke kann dabei als rillenförmige Vertiefung in das als Haken ausgebildete Haltemittel eingebracht sein. Wenn der Haken einen im wesentlichen U-förmigen Querschnitt aufweist, ist die Verstärkungssicke vorzugsweise im zentralen Bereich des Profils zwischen den beiden Schenkeln angeordnet. Die Verstärkungssicke kann sich entlang des gesamten Hakens erstrecken. Bevorzugt verläuft die Verstärkungssicke aber vom Fußbereich des Hakens, der im wesentlichen vertikal von dem als Platte ausgebildeten Befestigungsmittel ausgeht, bis in einen im wesentlich horizontal verlaufenden Schenkel des Hakens.

Wie oben bereits erwähnt, kann der Dachhaken aus beliebigen Werkstoffen und Werkstoffkombinationen bestehen, wobei zumindest der umzuformende Teil des Dachhakens aus einem formbaren Material besteht. Bevorzugt bestehen Befestigungsmittel und Haltemittel des Dachhakens aber aus einem metallischen Werkstoff, insbesondere einem korrosionsbeständigen metallischen Werkstoff wie Aluminium und, besonders bevorzugt, Edelstahl.

Der erfindungsgemäße Dachhaken ist insbesondere als so genannter Mittellasthaken für den Einsatz in Schneelastzonen 2 und 1 und Windlastzonen 3 und 2 zur Installation von Photovoltaik- oder Solarthermieanlagen geeignet.

Während herkömmliche Dachhaken in diesem Einsatzbereich eine Materialstärke von typischerweise 6 mm erfordern, kann der erfindungsgemäße Dachhaken aus Blechen mit einer Stärke von 3 mm und weniger gefertigt werden. Damit lässt sich eine Materialeinsparung von 30 bis 40% erzielen.

Die Erfindung wird im Folgenden unter Bezugnahme auf die beigefügte Zeichnung näher erläutert. In der Zeichnung zeigt
- Figur 1: eine perspektivische Ansicht einer bevorzugten Ausführungsform des erfindungsgemäßen Dachhakens vor dem Zusammenfügen von Befestigungsmittel und Haltemittel;
- Figur 2: eine perspektivische Unteransicht des Dachhakens der Figur 1 vor dem Biegen der Laschen des Haltemittels;
- Figur 3: eine perspektivische Ansicht des Dachhakens der Figur 1 nach dem Zusammenfügen von Befestigungsmittel und Haltemittel, und
- Figur 4: eine Draufsicht auf eine Variante des Hakens der Figuren 1 bis 3, wobei das Haltemittel eine Verstärkungssicke aufweist.

In der Zeichnung erkennt man eine insgesamt mit der Bezugsziffer 10 bezeichnete bevorzugte Ausführungsform des erfindungsgemäßen Dachhakens. Der Dachhaken 10 weist ein Befestigungsmittel 11, das als Metallplatte 12 ausgebildet ist, und ein Haltemittel 13, das als Haken 14 ausgebildet ist, auf. Die Platte 12 weist mehrere Rundlöcher 15 auf, mittels denen die Platte 12 auf einem (nicht dargestellten) Tragwerk, beispielsweise einem Dachsparren, eines Daches befestigbar ist. Dazu können beispielsweise Holzschrauben durch die Löcher 15 in den Dachsparren eingedreht werden. Der Haken 14 weist in der dargestellten Ausführungsform einen ersten Schenkel 16 auf, in welchem ein Langloch 17 zur Befestigung des Solarmoduls ausgespart ist. Ein bogenförmiger Abschnitt 18 des Hakens 14 verbindet den ersten Schenkel 16 mit einem zweiten Schenkel 19, welcher in ein Fußteil 20 übergeht, welches im Wesentlichen senkrecht in einem Verbindungsbereich 21 mit der Platte 12 verbunden ist.

Der dargestellte Dachhaken besteht, beispielsweise bei der Verwendung als Mittellast-dachhaken, aus einem 2,5 bis 3 mm dicken Edelstahlblech. Zur Erhöhung der Stabilität sind die Basisplatte 12 und der Haken 14 in ihrem Randbereich jeweils aufgekantet, so dass Schenkel 22, 23 und 24 gebildet werden, welche dem Flachmaterial eine verbesserte Steifigkeit verleihen. Der beispielsweise 5 bis 10 mm hohe Schenkel 22 der Platte 12 ist im dargestellten Beispiel als umlaufender Schenkel ausgebildet. Die Platte selbst hat typischerweise eine Länge von 100 bis 200 mm und eine Breite von 60 bis 80 mm. Die beiden seitlichen Schenkel 23, 24 des Hakens 14 haben typischerweise eine Höhe von ca. 10 mm, so dass der Schenkel 14 ein im Wesentlichen U-förmiges Querschnittsprofil 25 aufweist, wobei die Basis des " U" eine typische Breite von 30 mm aufweist.

Im Folgenden wird eine bevorzugte Ausführungsform der Verbindung zwischen dem Haken 14 und der Platte 12 im Verbindungsbereich 21 näher erläutert.

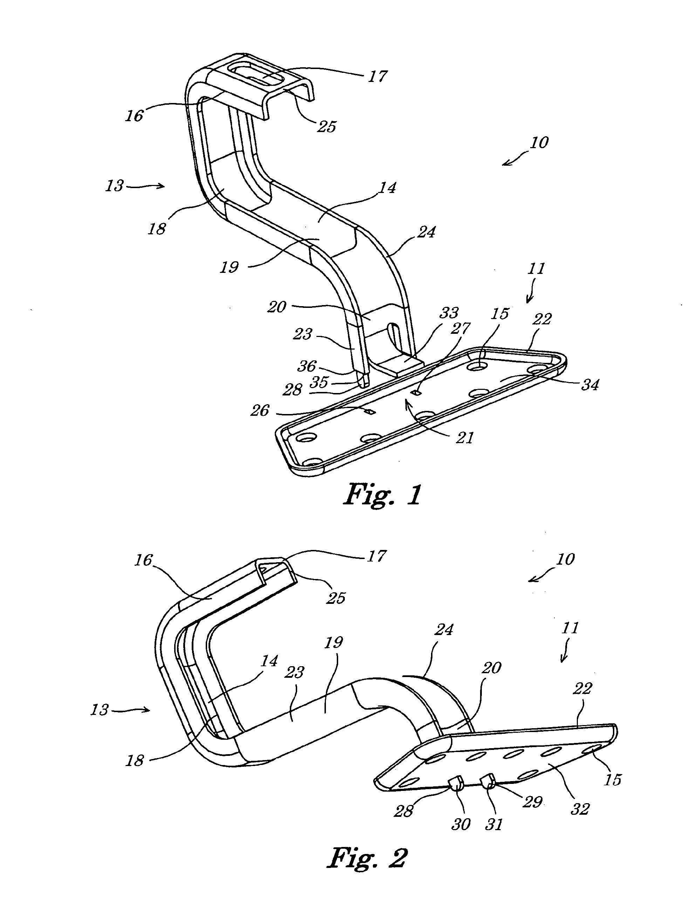

Die Platte 12 weist zwei Öffnungen 26, 27 auf, in welche Nasen 28, 29 eingreifen können, die an einem Ende des Hakens 14 vorgesehen sind. Im dargestellten Beispiel sind die Nasen 28, 29 in Verlängerung der aufgekanteten Schenkel 23, 24 des Hakens 14 angeordnet. Die Länge der Nasen ist so gewählt, dass die Nasen im zusammengebauten Zustand von Haken 14 und Platte 12 mit ihren freien Enden 30, 31 aus der Unterseite 32 der Platte 12 herausragen (vgl. Figur 2). Die Nasen 28, 29 können dann seitlich umgebogen und mit der Unterseite 32 der Platte 12 verpresst werden.

Figur 2 zeigt dabei den Zustand der miteinander verbundenen Haken 14 und Platte 12 vor dem Umbiegen und Verpressen der freien Enden 30, 31 der Nasen 28, 29.

Zu weiteren Erhöhung der Stabilität weist das zur Verbindung mit der Platte 12 vorgesehene Ende des Hakens 14 eine Lasche 33 auf, die aus dem Basisteil des U-förmigen Profils des Hakens 14 herausgestanzt ist. Die Lasche 33 wird nach vorn gebogen, so dass sie beim Einsetzen der Nasen 28, 29 in die Öffnungen 26, 27 der Platte 12 auf der Oberseite 34 der Platte 12 in Anlage kommt. Die Lasche 33 wird dann durch Clinchen und Verpressen mit der Oberseite 34 der Platte 12 verbunden. Bei der dargestellten Ausführungsform des erfindungsgemäßen Dachhakens sind die Nasen 28, 29 derart verjüngt, dass wenigstens eine Schulter 35, 36 gebildet wird, die beim Einsetzen der Nasen 28, 29 in die Löcher 26, 27 der Platte gegen die Oberseite 34 der Platte in Anschlag kommt. Bei einem Dachhakenprofil wie dem in den Figuren 1 bis 3 dargestellten Profil weist der Dachhaken 14 bevorzugt insbesondere den vorderen Anschlag 35 auf.

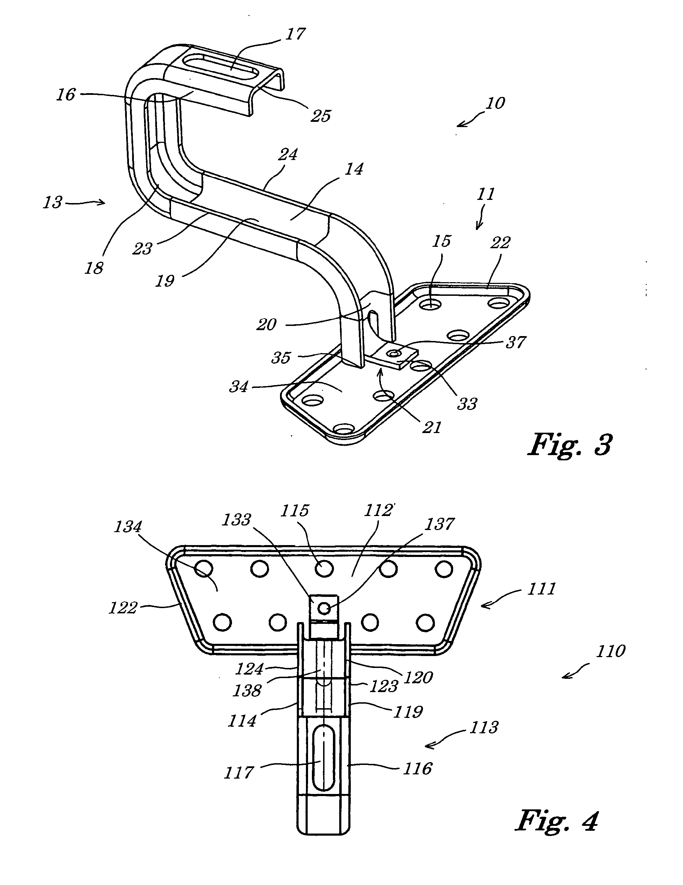

In Figur 3 ist die in den Figuren 1 und 2 dargstellte Ausführungsform des erfindungsgemäßen Dachhakens 10 im zusammengebauten Zustand dargstellt. Man erkennt insbesondere auch die durch das Clinchen der Lasche 33 entstandene Vertiefung 37 auf der Oberseite der Lasche 33.

In Figur 4 ist eine Draufsicht auf eine Variante 110 des Dachhakens 10 der Figuren 1 bis 3 dargestellt. Der Dachhaken 110 entspricht im wesentlichen dem Dachhaken der Figuren 1 bis 3. Bauelemente des Dachhakens 110, welche identische oder ähnliche Funktionen wie die Bauelemente des Dachhakens 10 erfüllen, sind mit denselben, aber um 100 erhöhten Bezugsziffern bezeichnet und werden hier nicht mehr näher erläutert. Der Dachhaken 110 unterscheidet sich von dem Dachhaken 10 lediglich durch eine Verstärkungssicke 138, die in dem U-förmigen Haken 114 zwischen den Schenkeln 123 und 124 eingebracht wurde. Die Verstärkungssicke 138 wurde als rillenförmige Vertiefung in das Blech des Hakens 114 eingeprägt. Bei einer Materialstärke des Blechs von beispielsweise 2,5 mm kann die Verstärkungssicke beispielsweise eine Tiefe von 2 mm und eine Breite von 15 mm aufweisen. Der Haken 114 hält so wesentlich höheren Belastungen stand. Wie man der Figur 4 entnimmt, ist die Verstärkungssicke 138 im zentralen Bereich des U-förmigen Profils des Hakens 114 zwischen den beiden Schenkeln 123, 124 angeordnet. Die Verstärkungssicke verläuft im dargestellten Beispiel vom Fußbereich 120 des Hakens 114 in den im wesentlich horizontal verlaufenden Schenkel 119 des Haken

## Patentansprüche

1. Dachhaken zur Montage eines Solarmoduls auf einem Dach, mit einem Befestigungsmittel (11) zur Befestigung des Dachhakens an dem Tragwerk des Daches und einem Haltemittel (13), das mit dem zu montierenden Solarmodul verbindbar ist, wobei das Befestigungsmittel (11) als Platte (12) ausgebildet ist, **dadurch gekennzeichnet, dass** die Platte (12) und das Haltemittel (13) durch Biegen, Verpressen und Clinchen miteinander verbunden sind, wobei das Haltemittel außerdem eine Lasche (33) aufweist, welche durch Clinchen und/oder Verpressen mit der Oberseite (34) der Platte (12) verbunden ist.

2. Dachhaken gemäß Anspruch 1, **dadurch gekennzeichnet, dass** die Platte (12) wenigstens eine Öffnung (26,27) aufweist, in welche wenigstens eine Nase (28,29) des Haltemittels (13) eingreift, wobei das aus der Platte (12) herausragende freie Ende (30,31) der Nase (28,29) umgebogen und mit der Unterseite (32) der Platte (12) verpresst ist.

3. Dachhaken gemäß einem der Anspruch 2, **dadurch gekennzeichnet, dass** die Nase (28,29) derart verjüngt ist, dass das Haltemittel (13) wenigstens eine Schulter (35,36) aufweist, die gegen die Oberseite (34) der Platte (12) in Anschlag kommt.

4. Dachhaken gemäß einem der Ansprüche 1 bis 3 **dadurch gekennzeichnet, dass** das Befestigungsmittel (11) und/oder das Haltemittel (13) aus einem Flachmaterial bestehen, das zur Versteifung zumindest teilweise umgeformt ist.

5. Dachhaken gemäß Anspruch 4, **dadurch gekennzeichnet, dass** die Umformung des Fachmaterials an den Seitenrändern des Befestigungsmittels (11) und/oder des Haltemittels (13) vorgesehen ist.

6. Dachhaken gemäß Anspruch 5, **dadurch gekennzeichnet, dass** die Seitenränder des Befestigungsmittels (11) und/oder des Haltemittels (13) mit aufgekanteten Schenkeln (22,23,24) versehen sind.

7. Dachhaken gemäß den Anspruch 6, **dadurch gekennzeichnet, dass** die Schenkel (22) der Platte (12) umlaufend ausgebildet sind.

8. Dachhaken gemäß einem der Ansprüche 1 bis 7, **dadurch gekennzeichnet, dass** die Platte (12) trapezförmig ausgebildet ist.

9. Dachhaken gemäß einem der Ansprüche 1 bis 8, **dadurch gekennzeichnet, dass** die Platte (12) Löcher (15) zum Verschrauben mit dem Tragwerk des Daches aufweist.

10. Dachhaken gemäß einem der Ansprüche 1 bis 10, **dadurch gekennzeichnet, dass** das Haltemittel (13) als Haken (14) ausgebildet ist, wobei die Schenkel (23,24) vorzugsweise an den Längsseiten des Hakens (14) ausgebildet sind.

11. Dachhaken gemäß Anspruch 10, **dadurch gekennzeichnet, dass** der Haken (14) im Querschnitt ein wesentlichen U-förmiges Profil (25) aufweist.

12. Dachhaken gemäß einem der Ansprüche 10 oder 11, **dadurch gekennzeichnet, dass** der Haken (14) an seinem einen freien Ende ein Langloch (17) zum Verbinden des Hakens (14) mit dem Solarmodul aufweist, wobei das freie Ende des Hakens (14) gegebenenfalls profiliert ist.

13. Dachhaken gemäß einem der Ansprüche 1 bis 12, **dadurch gekennzeichnet, dass** das Haltemittel (113) wenigstens eine Verstärkungssicke (138) aufweist.

14. Dachhaken gemäß einem der Ansprüche 1 bis 13, **dadurch gekennzeichnet, dass** der Dachhaken aus einem metallischen Werkstoff besteht, wobei der metallische Werkstoff vorzugsweise Edelstahl oder Aluminium ist.

## Claims

1. Roof hook for mounting a solar module on a roof, comprising fixing means (11) for fixing the roof hook to the supporting structure of the roof and retaining means (13) that may be connected to the solar module that is to be mounted, the fixing means (11) being embodied as a plate (12), **characterised in that** the plate (12) and the retaining means (13) are joined together by bending, pressing and clinching, the retaining means further comprising a strap (33) which is connected to the top (34) of the plate (12) by clinching and/or pressing.

2. Roof hook according to claim 1, **characterised in that** the plate (12) comprises at least one opening (26, 27) into which at least one projection (28, 29) of the retaining means (13) engages, the free end (30, 31) of the projection (28, 29) that projects from the plate (12) being bent round and pressed onto the underside (32) of the plate (12).

3. Roof hook according to one of claim 2, **characterised in that** the projection (28, 29) is tapered such that the retaining means (13) comprise at least one shoulder (35, 36) that abuts on the top (34) of the plate (12).

4. Roof hook according to one of claims 1 to 3, **characterised in that** the fixing means (11) and/or the retaining means (13) consist of a flat material that is at least partly shaped in order to stiffen it.

5. Roof hook according to claim 4, **characterised in that** the shaping of the flat material is provided at the side edges of the fixing means (11) and/or of the retaining means (13).

6. Roof hook according to claim 5, **characterised in that** the side edges of the fixing means (11) and/or of the retaining means (13) are provided with bent-up side members (22, 23, 24).

7. Roof hook according to claim 6, **characterised in that** the side members (22) of the plate (12) are arranged circumferentially.

8. Roof hook according to one of claims 1 to 7, **characterised in that** the plate (12) is of trapezoidal configuration.

9. Roof hook according to one of claims 1 to 8, **characterised in that** the plate (12) comprises holes (15) for screwing to the supporting structure of the roof.

10. Roof hook according to one of claims 1 to 10, **characterised in that** the retaining means (13) is embodied as a hook (14), the side members (23, 24) preferably being formed on the longitudinal sides of the hook (14).

11. Roof hook according to claim 10, **characterised in that** the hook (14) has a substantially U-shaped profile (25) in cross-section.

12. Roof hook according to one of claims 10 or 11, **characterised in that** the hook (14) comprises, at its one free end, a slot (17) for connecting the hook (14) to the solar module, the free end of the hook (14) optionally being profiled.

13. Roof hook according to one of claims 1 to 12, **characterised in that** the retaining means (113) comprise at least one reinforcement bead (138).

14. Roof hook according to one of claims 1 to 13, **characterised in that** the roof hook consists of a metallic material, the metallic material preferably being stainless steel or aluminium.

## Revendications

1. Crochet de toit pour le montage d'un module solaire sur un toit, comportant un moyen de fixation (11) pour fixer le crochet de toit sur la charpente du toit et un moyen de retenue (13) qui est destiné à être assemblé au module solaire à monter, ledit moyen de fixation (11) étant réalisé sous la forme d'une plaque (12), **caractérisé en ce que** ladite plaque (12) et ledit moyen de retenue (13) sont assemblés l'un à l'autre par cintrage, pressage et clinchage, ledit moyen de retenue comportant, en outre, une patte (33) qui est assemblée par clinchage et/ou pressage à la face supérieure (34) de la plaque (12).

2. Crochet de toit selon la revendication 1, **caractérisé en ce que** la plaque (12) comporte au moins un orifice (26, 27), dans lequel s'engage au moins un taquet (28, 29) du moyen de retenue (13), l'extrémité libre (30, 31) dudit taquet (28, 29), laquelle s'avance en saillie hors de la plaque (12), étant repliée et assemblée par pressage à la face inférieure (32) de la plaque (12).

3. Crochet de toit selon la revendication 2, **caractérisé en ce que** le taquet (28, 29) se rétrécit de telle sorte que le moyen de retenue (13) comporte au moins un épaulement (35, 36) qui vient en butée contre la face supérieure (34) de la plaque (12).

4. Crochet de toit selon l'une quelconque des revendications 1 à 3, **caractérisé en ce que** le moyen de fixation (11) et/ou le moyen de retenue (13) sont réalisés dans un matériau plat, qui pour son renforcement est soumis au moins partiellement à un formage.

5. Crochet de toit selon la revendication 4, **caractérisé en ce que** le formage du matériau plat est prévu sur les bords latéraux du moyen de fixation (11) et/ ou du moyen de retenue (13).

6. Crochet de toit selon la revendication 5, **caractérisé en ce que** les bords latéraux du moyen de fixation (11) et/ou du moyen de retenue (13) sont munis de flancs (22, 23, 24) repliés.

7. Crochet de toit selon la revendication 6, **caractérisé en ce que** les flancs (22) de la plaque (12) sont réalisés sur tout le pourtour.

8. Crochet de toit selon l'une quelconque des revendications 1 à 7, **caractérisé en ce que** la plaque (12) est réalisée en forme de trapèze.

9. Crochet de toit selon l'une quelconque des revendications 1 à 8, **caractérisé en ce que** la plaque (12) comporte des trous (15) pour la visser à la charpente du toit.

10. Crochet de toit selon l'une quelconque des revendications 1 à 10, **caractérisé en ce que** le moyen de retenue (13) est réalisé sous forme de crochet (14), les flancs (23, 24) étant réalisés de préférence sur les côtés longitudinaux dudit crochet (14).

11. Crochet de toit selon la revendication 10, **caractérisé en ce que** la section transversale du crochet (14) présente un profil (25) sensiblement en forme de U.

12. Crochet de toit selon la revendication 10 ou 11, **caractérisé en ce que** le crochet (14) comporte au niveau de son extrémité libre un trou oblong (17) pour assembler ledit crochet (14) avec le module solaire, ladite extrémité libre du crochet (14) étant profilée le cas échéant.

13. Crochet de toit selon l'une quelconque des revendications 1 à 12, **caractérisé en ce que** le moyen de retenue (113) comporte au moins une nervure de renfort (138).

14. Crochet de toit selon l'une quelconque des revendications 1 à 13, **caractérisé en ce que** le crochet de toit est réalisé dans un matériau métallique, ledit matériau métallique étant de préférence de l'acier inoxydable ou de l'aluminium.
